# FASCICULE DE BREVET EUROPEEN

(11) **EP 4 309 620 B1**
(45) Date de publication et mention de la délivrance du brevet: **05.11.2025**
(21) Numéro de dépôt: 22186347.5
(22) Date de dépôt: 21.07.2022
(51) Int. Cl.: A61C 8/00, A61C 5/30

(54) **PROCEDE DE FABRICATION D'UNE EMBASE POUR LA RECEPTION D'UNE PROTHESE DENTAIRE**
VERFAHREN ZUR HERSTELLUNG EINER BASIS ZUR AUFNAHME EINER ZAHNPROTHESE
METHOD FOR MANUFACTURING A BASE FOR RECEIVING A DENTAL PROSTHESIS

(43) Date de publication de la demande: 24.01.2024
(73) Titulaire: ANTHOGYR, 74700 Sallanches (FR)
(72) Inventeur: RICHARD, Hervé, 73590 NOTRE DAME DE BELLECOMBE (FR); CHOPARD-LALLIER, Anne-Lise, 74700 SALLANCHES (FR)
(74) Mandataire: Cabinet Poncet

(56) Documents cités:
- WO-A1-2022/077129
- FR-A1- 3 097 117
- US-A1- 2010 330 533
- US-A1- 2014 093 842
- US-A1- 2016 206 408
- US-A1- 2019 029 786

## Description

### DOMAINE TECHNIQUE DE L'INVENTION

La présente invention concerne le domaine de la restauration dentaire, et concerne plus particulièrement une embase pour la réception d'une prothèse dentaire sur un implant dentaire.

On connaît une embase en titane ou en alliage de titane pour la réception par collage d'une prothèse dentaire sur un implant dentaire, s'étendant selon une direction longitudinale entre une extrémité proximale et une extrémité distale, comportant :
- un tronçon proximal conformé pour être reçu dans ou sur un implant dentaire,
- un tronçon distal conformé pour recevoir en appui une prothèse dentaire, ledit tronçon distal comportant une surface de réception destinée à recevoir ladite prothèse dentaire par collage.

Pour améliorer la retenue de la prothèse dentaire par collage sur la surface de réception de l'embase, ladite surface de réception est usuellement soumise à un traitement de surface abrasif, tel qu'un sablage.

Un premier inconvénient est que ce traitement de surface abrasif, par sablage notamment, est complexe et prend un temps non négligeable. Il faut en effet bien protéger les surfaces de l'embase qui ne sont pas destinées au collage, en particulier la surface destinée à venir au contact des tissus mous (gencives) et les arêtes définissant les limites de la surface de réception qui doivent rester intactes pour assurer une parfaite continuité entre la forme de l'embase et la prothèse dentaire (afin d'éviter des discontinuités propices à l'accumulation de tartre et de bactéries).

Par ailleurs, la surface extérieure de la portion d'embase destinée à être entourée par les tissus mous du patient (portion dite « trans-gingivale » de l'embase) est souvent soumise à une préparation de surface ou à un traitement de surface spécifique visant à favoriser la cicatrisation et/ou l'adhérence des tissus mous, ou visant encore à limiter la formation de plaque dentaire. Un sablage de la surface de réception de l'embase, destinée à recevoir ladite prothèse dentaire par collage, peut endommager la préparation de surface ou le traitement de surface spécifique appliqué(e) à la portion « trans-gingivale » de l'embase.

Un deuxième inconvénient est qu'il faut prendre soin de bien nettoyer l'embase après son traitement de surface abrasif, afin de ne pas laisser de média de sablage. Le média de sablage peut en effet créer une inflammation des tissus mous du patient et/ou gêner la bonne connexion de l'embase avec l'implant dentaire ou avec la prothèse dentaire.

Un troisième inconvénient est qu'un traitement de surface abrasif, tel qu'un sablage, assombrit la teinte de la surface de réception de l'embase. Or, la prothèse dentaire, le plus souvent réalisée en un matériau céramique, présente un caractère translucide. La teinte assombrie de la surface de réception peut ainsi rendre l'embase plus facilement perceptible visuellement à travers la prothèse dentaire. Cela est à la fois inesthétique et gênant pour le patient car la perception visuelle de l'embase par les tiers leur révèle le caractère prothétique de la dent du patient.

Un quatrième inconvénient est qu'une surface de réception d'embase ayant subi un sablage doit présenter une aire relativement importante pour assurer une force de retenue par collage suffisante. Cela oblige souvent à prévoir un tronçon distal relativement long et/ou encombrant, ce qui limite les possibilités, voire les empêche, de recourir à un canal de vissage dans la prothèse qui est incliné par rapport à l'axe d'une vis de transfixation destinée à retenir l'embase sur un l'implant dentaire.

Le document US2016206408A1 décrit une embase en titane ou céramique pour la réception d'une prothèse dentaire, comportant un tronçon proximal conformé pour être reçu dans un implant dentaire et un tronçon distal avec une surface de réception conformée pour recevoir une prothèse dentaire par collage; ledit tronçon distal comportant des sillons usinés par un outil coupant ou écrasant dans ladite surface de réception.

Le document US2019029786A1 décrit une embase en titane avec des rainures dans sa surface de réception conformée pour recevoir une prothèse dentaire.

### EXPOSE DE L'INVENTION

Un problème proposé par la présente invention est de concevoir un procédé de fabrication d'embase pour la réception d'une prothèse dentaire sur un implant dentaire, qui permette d'améliorer la tenue d'une prothèse dentaire par collage, mais sans recourir au sablage.

Simultanément, l'invention vise à proposer un procédé de fabrication d'embase plus rapide, qui limite les risques d'inflammation des tissus mous et évite de créer des infractuosités et discontinuités favorisant l'accumulation de tartre et de bactéries, et qui limite les risques d'altération de la surface extérieure de la portion trans-gingivale d'embase.

Selon encore un autre aspect de la présente invention, il est proposé un procédé de fabrication d'embase permettant d'obtenir une esthétique plus satisfaisante une fois la prothèse dentaire assemblée sur l'embase.

Pour atteindre ces objets ainsi que d'autres, l'invention propose un procédé de fabrication d'une embase en titane ou en alliage de titane pour la réception d'une prothèse dentaire sur un implant dentaire, s'étendant sensiblement selon une direction longitudinale entre une extrémité proximale et une extrémité distale, comportant :
- un tronçon proximal conformé pour être reçu dans ou sur un implant dentaire et s'étendant selon une première direction d'allongement,
- un tronçon distal conformé pour recevoir en appui une prothèse dentaire et s'étendant selon une deuxième direction d'allongement, ledit tronçon distal comportant une surface de réception destinée à recevoir ladite prothèse dentaire par collage ;
selon l'invention, on texture au moins en partie ladite surface de réception par laser, par creusement de sillons dans ladite surface de réception

Une texturation par laser augmente de manière satisfaisante la force de retenue de la prothèse dentaire par collage sur l'embase à l'encontre d'un effort d'extraction appliqué selon la direction longitudinale.

L'augmentation de la force de retenue par collage permet d'envisager une réduction de la surface de réception (interface embase/prothèse sur laquelle est réalisé le collage). Une réduction de cette surface est avantageuse pour limiter l'encombrement du tronçon distal et l'encombrement général de l'embase. Il est même particulièrement avantageux de pouvoir réduire la hauteur du tronçon distal lorsqu'on souhaite avoir un canal de vissage dans la prothèse qui soit incliné par rapport à l'axe de la vis de transfixation destinée à retenir l'embase sur un l'implant dentaire. De bons résultats ont été obtenus avec une surface de réception présentant une aire inférieure à 30 mm².

Une texturation par laser ne nécessite pas de masquer des parties de l'embase : on gagne ainsi un temps précieux et on évite de dégrader accidentellement certaines zones de l'embase (en particulier aux limites de la surface de réception, et la surface extérieure de la portion trans-gingivale d'embase). Il n'est pas utilisé de média pulvérulent de sablage, de sorte que les risques d'inflammation des tissus mous ou de gêne dans la connexion sont réduits. Enfin, une texturation par laser n'assombrit pas la teinte de la surface de réception.

Avantageusement, les sillons de la texturation forment une grille. Une telle texturation peut être automatisée aisément, et peut être réalisée en un temps très court (notamment en moins de 15 secondes).

De préférence, la grille peut présenter un motif sensiblement rectangulaire, de préférence sensiblement carré.

Avantageusement, la texturation peut être réalisée par creusement de sillons orientés de façon oblique, de préférence à sensiblement 45°, par rapport à la deuxième direction d'allongement. Une telle orientation des sillons permet d'augmenter encore significativement la force de retenue de la prothèse dentaire par collage sur l'embase à l'encontre d'un effort d'extraction appliqué selon la deuxième direction d'allongement.

De préférence, la grille peut être réalisée avec un motif sensiblement carré dont la longueur des côtés est comprise entre 150 µm et 350 µm, de préférence entre 200 µm et 300 µm. Une telle grille a donné de très bons résultats en termes de force de retenue de la prothèse dentaire sur l'embase.

Avantageusement, les sillons ont une profondeur comprise entre 5 µm et 15 µm, de préférence entre 7 µm et 10 µm. Une telle profondeur s'est révélée un bon compromis entre vitesse de réalisation de la texturation et force de retenue de la prothèse dentaire sur l'embase.

De préférence, avant ou après texturation d'une partie au moins de la surface de réception, on peut procéder à un balayage avec le faisceau du laser d'une partie au moins de ladite surface de réception de façon à provoquer un jaunissement de ladite au moins une partie de ladite surface de réception. Un tel jaunissement d'une partie au moins de ladite surface de réception permet de rendre encore moins perceptible visuellement l'embase à travers la prothèse dentaire. Le jaunissement procure une apparence de dent naturelle esthétiquement satisfaisante.

Réalisé par laser, le jaunissement de l'embase peut être réalisé sur le même poste que celui où est réalisée la texturation. Ceci est particulièrement avantageux, en particulier par rapport à une coloration par anodisation, car il n'y a pas de reprise sur un poste distinct pour réaliser l'étape de coloration. Divers marquages (logotype du fabricant, référence, numéro de lot, etc.) peuvent également être réalisés sur l'embase par laser sur le même poste de travail.

Avantageusement, pour améliorer encore le caractère esthétique de la restauration dentaire, on peut procéder à un balayage avec le faisceau du laser de la totalité de ladite surface de réception de façon à provoquer un jaunissement de la totalité de ladite surface de réception. Même en prévoyant un jaunissement en plus de la texturation, le temps de production reste très réduit : le demandeur a mesuré un temps de production, incluant jaunissement et texturation, de seulement 12 secondes.

De préférence, on peut prévoir que :
- l'embase comporte au moins un organe d'indexation en rotation comprenant une face ou surface conformée pour coopérer avec la prothèse dentaire afin de bloquer en rotation ladite embase par rapport à la prothèse dentaire autour de la deuxième direction d'allongement,
- ladite face ou surface est dépourvue de texturation.

La précision et la fiabilité de l'indexation se sont en effet révélées encore meilleures lorsque la face ou surface dudit organe d'indexation assurant l'indexation n'est pas texturée au laser.

Selon un autre aspect de la présente invention, il est proposé un procédé de fabrication ex-vivo d'un ensemble de restauration dentaire comprenant :
- une prothèse dentaire, de préférence fabriquée en un matériau céramique,
- une embase en titane ou en alliage de titane pour la réception d'une prothèse dentaire sur un implant dentaire,
lors duquel :
- on fournit une embase obtenue par la mise en œuvre du procédé de fabrication tel que précédemment décrit,
- on fournit une prothèse dentaire, comportant un logement intérieur à surface de liaison destinée à être rapportée et fixée par collage à la surface de réception de l'embase,
- on rapporte et on fixe la prothèse dentaire sur l'embase par collage entre la surface de liaison de la prothèse dentaire et la surface de réception de l'embase,
- la surface de liaison de la prothèse dentaire n'a pas subi de traitement de surface abrasif, notamment par sablage.

Habituellement, pour favoriser une bonne retenue par collage de la prothèse dentaire sur l'embase, la surface de liaison de la prothèse dentaire est soumise à un traitement de surface abrasif, notamment par sablage.

Le demandeur s'est ici aperçu que, de façon surprenante, l'amélioration de la retenue par collage de la prothèse dentaire sur l'embase est telle qu'il peut être envisagé de se passer d'un traitement de la surface de liaison de la prothèse dentaire au moyen d'un traitement de surface abrasif, notamment par sablage.

Se passer d'un traitement de surface abrasif de la surface de liaison de la prothèse dentaire s'avère particulièrement avantageux. On gagne un temps précieux dès lors qu'il n'y a pas à effectuer de masquage des zones à ne pas traiter, ni de nettoyage intensif du média pulvérulent de sablage. On évite en outre de dégrader accidentellement certaines zones de la prothèse dentaire, en particulier aux limites de la surface de liaison, ce qui favorise une bonne continuité de surfaces entre l'embase et la prothèse dentaire et limite les risques de discontinuités propices à l'accumulation de tartre et de bactéries.

Selon encore un autre aspect de la présente invention, il est proposé une embase en titane ou en alliage de titane pour la réception d'une prothèse dentaire sur un implant dentaire, s'étendant sensiblement selon une direction longitudinale entre une extrémité proximale et une extrémité distale, comportant :
- un tronçon proximal conformé pour être reçu dans ou sur un implant dentaire et s'étendant selon une première direction d'allongement,
- un tronçon distal conformé pour recevoir en appui une prothèse dentaire et s'étendant selon une deuxième direction d'allongement, ledit tronçon distal comportant une surface de réception destinée à recevoir ladite prothèse dentaire par collage ;
selon la présente invention, ladite surface de réception est au moins en partie texturée par laser par creusement de sillons dans ladite surface de réception.

Avantageusement, les sillons de la texturation forment une grille.

Avantageusement, la grille peut présenter un motif sensiblement rectangulaire, de préférence sensiblement carré.

Avantageusement, la grille peut comporter des sillons orientés de façon oblique, de préférence à sensiblement 45°, par rapport à la deuxième direction d'allongement.

Avantageusement, la grille peut présenter un motif sensiblement carré dont la longueur des côtés est comprise entre 150 µm et 350 µm, de préférence entre 200 µm et 300 µm.

Avantageusement, les sillons peuvent avoir une profondeur comprise entre 5 µm et 15 µm, de préférence entre 7 µm et 10 µm.

Les sillons peuvent être bordés, le long de leurs côtés, par des bourrelets de matière présentant une hauteur comprise entre 5 µm et 15 µm, de préférence entre 7 µm et 10 µm. De tels sillons ont permis une augmentation significative de la force de retenue de la prothèse dentaire sur l'embase.

De préférence, une partie au moins de ladite surface de réception présente une coloration jaune.

Avantageusement, toute ladite surface de réception peut présenter une coloration jaune.

De préférence, on peut prévoir que :
- l'embase comporte au moins un organe d'indexation en rotation comprenant une face ou surface conformée pour coopérer avec la prothèse dentaire afin de bloquer en rotation ladite embase par rapport à la prothèse dentaire autour de la deuxième direction d'allongement,
- ladite face ou surface est dépourvue de texturation par laser.

Selon encore un autre aspect de la présente invention, il est proposé un ensemble de restauration dentaire comportant :
- une embase obtenue par le procédé tel que précédemment décrit ou une embase telle que précédemment décrite,
- une prothèse dentaire, de préférence fabriquée en un matériau céramique, et comportant un logement intérieur à surface de liaison destinée à être rapportée et fixée par collage à la surface de réception de l'embase.

Avantageusement, la surface de liaison de la prothèse dentaire n'a pas subi de traitement de surface abrasif, notamment par sablage.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en perspective d'une embase selon la présente invention ;
[Fig.2] La figure 2 est une vue de côté de l'embase de la figure 1 ;
[Fig.3] La figure 3 est une vue de détail d'une partie de la surface de réception de l'embase de la figure 1, prise au moyen d'un microscope électronique à balayage selon un premier grossissement ;
[Fig.4] La figure 4 est une vue de détail d'un partie de la surface de réception de l'embase de la figure 1, prise au moyen d'un microscope électronique à balayage selon un deuxième grossissement ;
[Fig.5] La figure 5 est un disque en alliage de titane sur lequel a été effectuée, en plus d'une texturation identique à celle de la surface de réception de l'embase de la figure 1, une coloration jaune par traitement au laser ;
[Fig.6] La figure 6 est une vue en coupe d'une prothèse dentaire destinée à être rapportée et collée sur l'embase de la figure 1 ;
[Fig.7] La figure 7 est une vue en perspective éclatée d'un implant dentaire, d'un ensemble de restauration dentaire comprenant l'embase de la figure 1 et la prothèse dentaire de la figure 6, et d'une vis ;
[Fig.8] La figure 8 est une vue de côté et en coupe longitudinale de l'implant dentaire, de l'ensemble de restauration dentaire et de la vis de la figure 7 ; et [Fig.9] La figure 9 est une vue en coupe transversale de l'ensemble de restauration dentaire de la figure 8.

### DESCRIPTION DES MODES DE REALISATION PREFERES

Lorsque des références numériques identiques sont utilisées dans plusieurs figures, modes de réalisation ou variantes de l'invention, ces références numériques désignent des éléments identiques ou similaires dans chacun(e) des figures, modes de réalisation ou variantes.

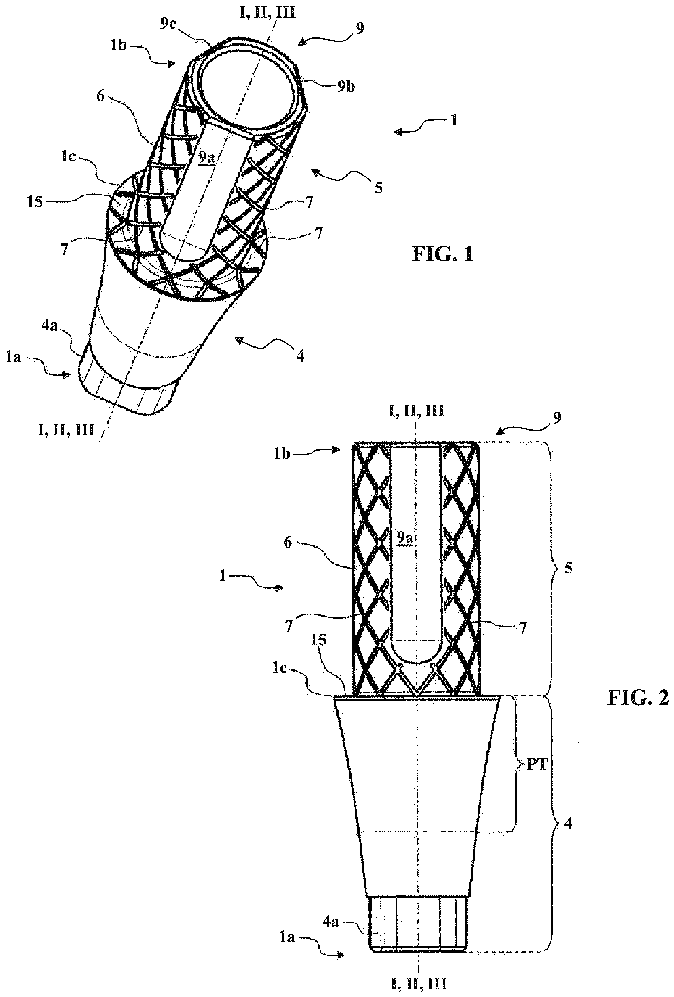

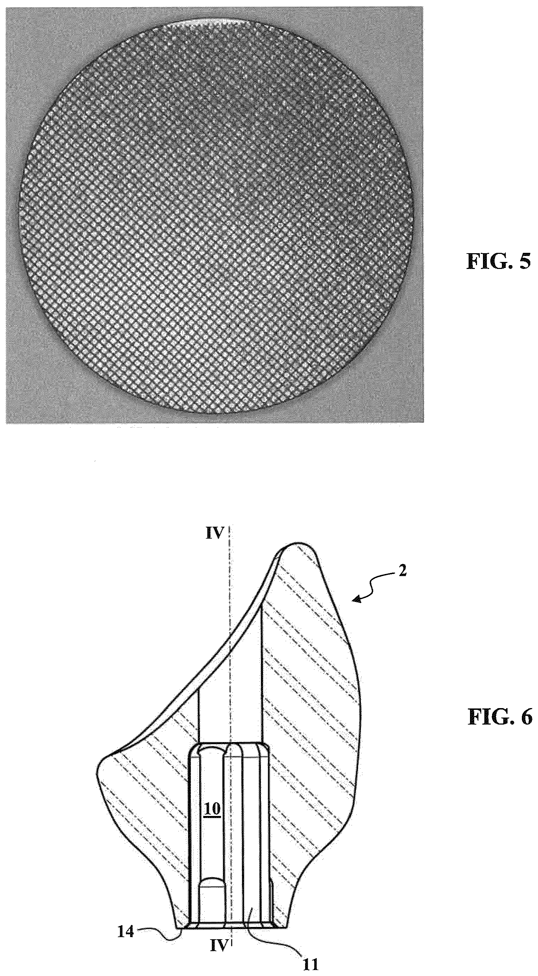

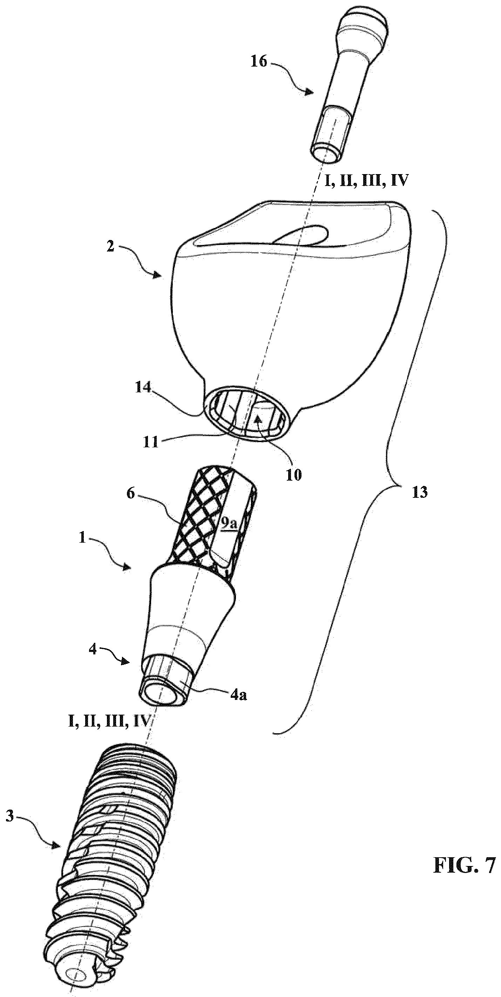

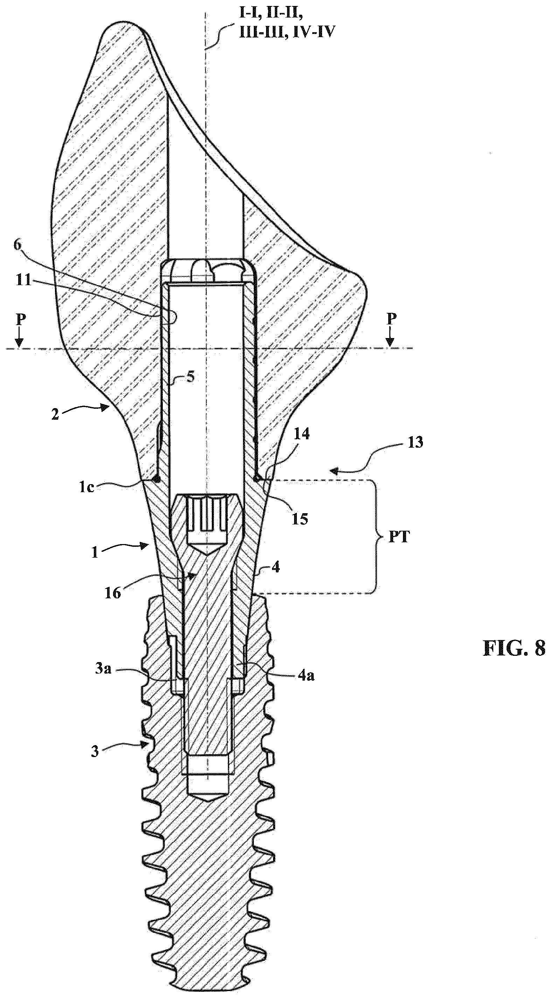

Sur les figures 1 et 2 est illustrée une embase 1 en alliage de titane (plus précisément en alliage Ti6Al4V) pour la réception par collage d'une prothèse dentaire 2 (figure 6) sur un implant dentaire 3 (figures 7 et 8).

La prothèse dentaire est de préférence fabriquée en un matériau céramique (en zircone ou en disilicate de lithium par exemple), et possède de ce fait un caractère translucide. D'autres matériaux translucides peuvent également être utilisés.

L'embase 1 s'étend sensiblement selon une direction longitudinale I-I entre une extrémité proximale 1a et une extrémité distale1b. L'embase 1 comporte :
- un tronçon proximal 4 conformé pour être reçu dans l'implant dentaire 3 et s'étendant selon une première direction d'allongement II-II,
- un tronçon distal 5 conformé pour recevoir en appui la prothèse dentaire 2 (figure 8) et s'étendant selon une deuxième direction d'allongement III-III, ledit tronçon distal 5 comportant une surface de réception 6 destinée à recevoir ladite prothèse dentaire 2 par collage.

L'une au moins des première II-II et deuxième III-III directions d'allongement coïncide avec la direction longitudinale I-I. Ici les première II-II et deuxième III-III directions d'allongement coïncident toutes les deux avec la direction longitudinale I-I. Les première II-II et deuxième III-III directions d'allongement peuvent toutefois former entre elles un angle non nul, de façon que l'embase 1 est du type « embase angulée ».

La surface de réception 6 est en partie texturée par laser.

La texturation comporte des sillons 7 creusés dans ladite surface de réception 6. Les sillons 7 forment une grille.

On voit plus particulièrement sur la figure 2 que les sillons 7 sont orientés de façon oblique, sensiblement à 45°, par rapport à la deuxième direction d'allongement III-III.

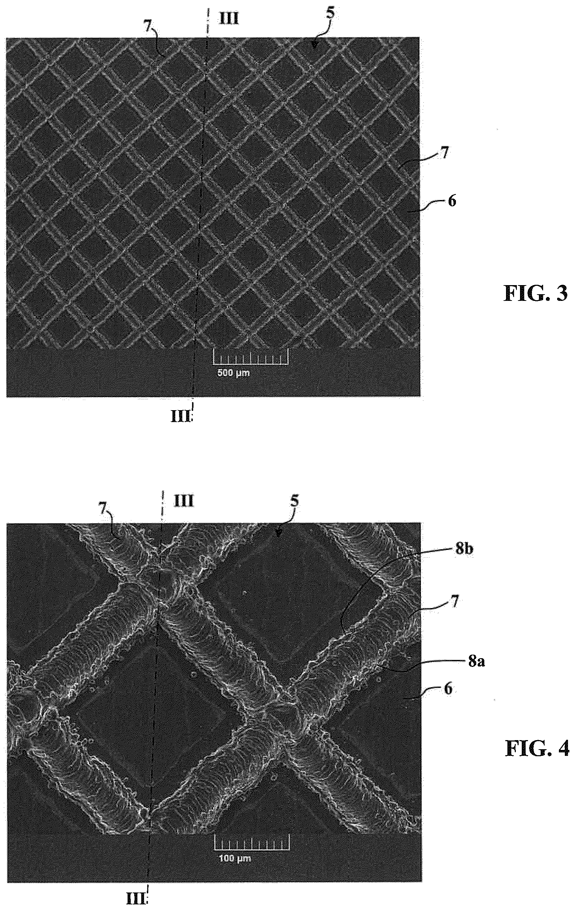

Les sillons 7 sont plus particulièrement visibles sur les figures 3 et 4 qui sont des vues prises au moyen d'un microscope électronique à balayage.

La grille formée par les sillons 7 présente un motif sensiblement carré.

La longueur des côtés est comprise entre 150 µm et 350 µm, de préférence entre 200 µm et 300 µm. Ici, la longueur des côtés est d'environ 250 µm.

Les sillons 7 ont une profondeur comprise entre 5 µm et 15 µm, de préférence entre 7 µm et 10 µm. Ici, les sillons 7 ont une profondeur moyenne d'environ 9,5 µm.

On voit plus particulièrement sur la figure 4 que les sillons 7 sont bordés, le long de leurs côtés, par des bourrelets 8a et 8b de matière. Ces bourrelets 8a et 8b résultent du creusement des sillons 7 au moyen du laser, et présentent une hauteur comprise entre 5 µm et 15 µm, de préférence entre 7 µm et 10 µm. Ici, on a mesuré que les bourrelets 8a et 8b ont une hauteur moyenne d'environ 8 µm.

Le fond des sillons 7 présente des stries sensiblement perpendiculaires au sens d'allongement des sillons 7. Ces stries résultent de la combinaison des impulsions et de l'avance de la source laser.

La texturation au moyen des sillons 7 a permis d'augmenter très significativement (de 87% par rapport à une embase sablée) la force de retenue de la prothèse dentaire 2 par collage sur l'embase 1 à l'encontre d'un effort d'extraction appliqué selon la deuxième direction d'allongement III-III (coïncidant avec la direction longitudinale I-I).

Les sillons 7 ont été réalisés au laser au moyen d'une machine de marquage/gravage laser commercialisée sous l'appellation « Combiline Advanced WT » par la société suisse ROFIN BAASEL (récemment rachetée par la société américaine COHERENT, INC). Cette machine est pourvue d'une source laser commercialisée sous l'appellation « PowerLine F 20 varia » ayant une puissance de sortie maximale moyenne de 19 W.

Pour réaliser la texturation à sillons 7 des figures 3 et 4, les paramètres suivants ont été utilisés :
- puissance : 50%
- fréquence : 50 kHz
- vitesse : 500 mm/s
- durée d'impulsion : 100 ns
- focalisation : 0%
- pas : 250 µm
- nombre de passage(s) : 2.

Afin d'améliorer le résultat esthétique de la restauration dentaire, une partie au moins de la surface de réception 6 a été traitée par laser afin de présenter une coloration jaune. Ce traitement (jaunissement) peut être réalisé avant ou après creusement des sillons 7.

La figure 5 est une photographie d'un disque en alliage de titane (le même que celui de l'embase 1) sur lequel a été réalisé le traitement de jaunissement et dans lequel ont été creusés des sillons 7 identiques à ceux des figures 3 et 4. Le traitement de jaunissement a volontairement été effectué sur un disque plat en alliage de titane afin de bien montrer la coloration jaune obtenue, sans que son rendu visuel soit affecté par le caractère convexe de la surface de réception 6 de l'embase 1.

Une telle coloration de la surface de réception 6 permet de contribuer à ce que la prothèse dentaire 2 ait l'apparence d'une dent naturelle.

De préférence, la totalité de la surface de réception 6 présente une coloration jaune. Pour ce faire, on procède à un balayage avec le faisceau du laser de la totalité de ladite surface de réception.

Le traitement de jaunissement est effectué au moyen de la même machine que celle utilisée pour la réalisation de la texturation à sillons 7, mais avec des paramètres de fonctionnement différents, à savoir :
- puissance : entre 50% et 90%
- fréquence : entre 100 kHz et 300 kHz
- vitesse : entre 50 mm/s et 500 mm/s
- durée d'impulsion : entre 14 ns et 50 ns
- focalisation : 0%
- pas : 50 µm
- nombre de passage(s) : 1.

De façon plus précise, les paramètres qui ont été utilisés pour parvenir à la teinte jaune de la photographie de la figure 5 sont :
- puissance : 70%
- fréquence : 200 kHz
- vitesse : 400 mm/s
- durée d'impulsion : 30 ns
- focalisation : 0%
- pas : 50 µm
- nombre de passage(s) : 1.

On voit plus particulièrement sur les figures 1 et 2 que le tronçon distal 5 se présente sensiblement sous la forme d'un cylindre à section circulaire s'étendant selon la deuxième direction d'allongement III-III.

Pour un positionnement en une orientation prédéterminée de la prothèse dentaire 2 sur l'embase 1, l'embase 1 comporte un organe d'indexation en rotation 9. L'organe d'indexation en rotation 9 permet de bloquer en rotation l'embase 1 par rapport à la prothèse dentaire 2 autour de la deuxième direction d'allongement III-III (coïncidant avec la direction longitudinale I-I).

L'organe d'indexation en rotation 9 comprend ici trois méplats ménagés à 120 degrés les uns des autres sur la surface latérale du tronçon distal 5, procurant trois faces planes 9a, 9b et 9c.

De son côté, la prothèse dentaire 2 comporte un logement intérieur 10 s'étendant selon une troisième direction d'allongement IV-IV. Le logement intérieur 10 comporte une surface de liaison 11 destinée à être rapportée et fixée par collage à la surface de réception 6 de l'embase 1 (figure 6 à 8).

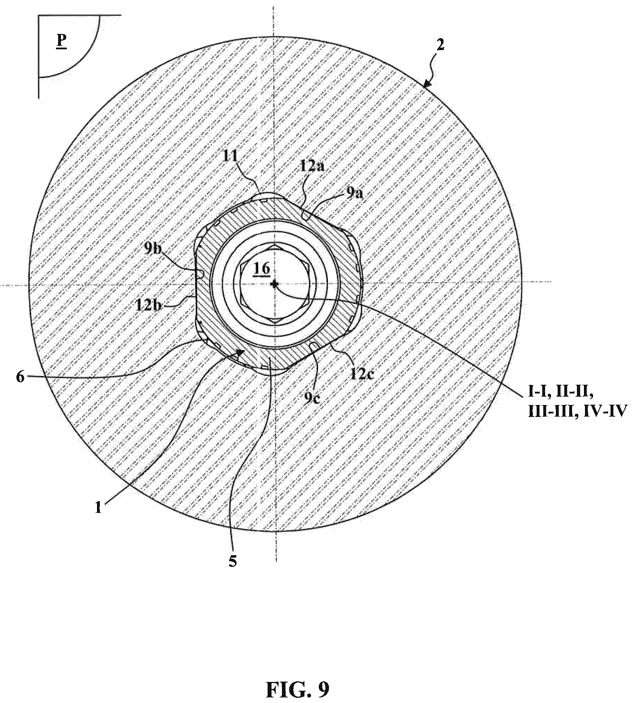

On voit plus particulièrement sur la figure 9 (qui est une vue en coupe selon la plan P de la figure 8) que la surface de liaison 11 comporte trois faces planes 12a, 12b et 12c disposées à 120 degrés les unes des autres.

Lorsque la prothèse dentaire 2 est reçue par emmanchement (et collage) sur le tronçon distal 5 de l'embase 1, les trois faces planes 9a à 9c du tronçon distal 5 coopèrent avec les trois faces planes 12a à 12c de la prothèse dentaire 2 afin de bloquer en rotation l'embase 1 par rapport à la prothèse dentaire 2 autour de la deuxième direction d'allongement III-III (coïncidant avec la direction longitudinale I-I).

Pour garantir un fonctionnement satisfaisant de l'indexation opérée entre l'embase 1 et la prothèse dentaire 2, les faces 9a à 9c de l'organe d'indexation 9 sont dépourvues de texturation au laser. On évite ainsi la formation de bourrelets de matière similaires aux bourrelets 8a et 8b, qui pourraient nuire au bon emmanchement de la prothèse dentaire 2 sur l'embase 1 et à leur bonne indexation.

On voit plus particulièrement sur la figure 7 que le tronçon proximal 4 de l'embase 1 se termine par un tronçon d'indexation 4a à section transversale non circulaire (sensiblement triangulaire ici). Le tronçon d'indexation 4a est destiné à être reçu dans un logement d'indexation 3a (figure 8) à section transversale non circulaire et complémentaire. Le tronçon d'indexation 4a et le logement d'indexation 3a coopèrent pour bloquer en rotation l'embase 1 par rapport à l'implant dentaire 3 autour de la direction longitudinale I-I.

Après sa texturation (et éventuellement sa coloration) par laser, l'embase 1 peut être utilisée pour fabriquer un ensemble de restauration dentaire 13 (figures 7 et 8) à l'aide de la prothèse dentaire 2.

Pour ce faire, on rapporte (en faisant coïncider la deuxième direction d'allongement III-III et la troisième direction d'allongement IV-IV) et on fixe la prothèse dentaire 2 sur l'embase 1 par collage entre la surface de liaison 11 de la prothèse dentaire 2 et la surface de réception 6 de l'embase 1.

Le fait d'avoir procédé à une texturation par laser de la surface de réception 6 permet en particulier de ne pas endommager l'arête circulaire 1c (figures 1 et 2) qui délimite la surface de réception 6 de l'embase 1. Ainsi, le tronçon proximal 4 de l'embase 1 prolonge de façon continue la prothèse dentaire 2 en évitant la présence de discontinuités propices à l'accumulation de tartre et de bactéries.

Habituellement, pour favoriser une bonne retenue par collage de la prothèse dentaire 2 sur l'embase 1, la surface de liaison 11 de la prothèse dentaire 2 est soumise à un traitement de surface abrasif, notamment par sablage.

Un tel traitement abrasif peut toutefois mener à une dégradation de la surface 14 (se présentant sensiblement sous la forme d'une couronne) destinée à venir au contact d'une surface 15 correspondante (se présentant également sensiblement sous la forme d'une couronne, et faisant partie de la surface de réception 6) prévue sur l'embase 1 et délimitée par l'arête circulaire 1c, et/ou à une dégradation de la surface extérieure de la portion trans-gingivale PT de l'embase 1 (figure 8).

Pour encore mieux limiter les risques de discontinuités entre l'embase 1 et la prothèse dentaire 2, propices à l'accumulation de tartre et de bactéries, on peut s'abstenir d'appliquer un traitement de surface abrasif, notamment par sablage, à la surface de liaison 11 de la prothèse dentaire 2

Le demandeur s'est en effet aperçu que, de façon surprenante, l'amélioration de la retenue par collage de la prothèse dentaire 2 sur l'embase 1 par la texturation par laser est telle qu'il peut être envisagé de se passer d'un traitement de la surface de liaison 11 de la prothèse dentaire 2 au moyen d'un traitement de surface abrasif, notamment par sablage.

On voit plus particulièrement sur les figures 7 et 8 qu'une vis 16 permet de retenir l'ensemble de restauration dentaire 13 sur l'implant dentaire 3.

La présente invention n'est pas limitée aux modes de réalisation qui ont été explicitement décrits, mais est définie par le texte des revendications ci-après.

## Revendications

1. Procédé de fabrication d'une embase (1) en titane ou en alliage de titane pour la réception d'une prothèse dentaire (2) sur un implant dentaire (3), s'étendant sensiblement selon une direction longitudinale (I-I) entre une extrémité proximale (1a) et une extrémité distale (1b), comportant :
- un tronçon proximal (4) conformé pour être reçu dans ou sur un implant dentaire (3) et s'étendant selon une première direction d'allongement (II-II),
- un tronçon distal (5) conformé pour recevoir en appui une prothèse dentaire (2) et s'étendant selon une deuxième direction d'allongement (III-III), ledit tronçon distal (5) comportant une surface de réception (6) destinée à recevoir ladite prothèse dentaire (2) par collage, procédé de fabrication dans lequel on texture au moins en partie ladite surface de réception (6) par laser par creusement de sillons (7) dans ladite surface de réception (6).

2. Procédé de fabrication d'une embase (1) selon la revendication 1, **caractérisé en ce que** les sillons (7) de la texturation forment une grille.

3. Procédé de fabrication d'une embase (1) selon la revendication 2, **caractérisé en ce que** la grille présente un motif sensiblement rectangulaire, de préférence sensiblement carré.

4. Procédé de fabrication d'une embase (1) selon la revendication 3, **caractérisé en ce que** la texturation est réalisée par creusement de sillons (7) orientés de façon oblique, de préférence à sensiblement 45°, par rapport à la deuxième direction d'allongement (III-III).

5. Procédé de fabrication d'une embase (1) selon l'une des revendications 3 ou 4, **caractérisé en ce que** la grille est réalisée avec un motif sensiblement carré dont la longueur des côtés est comprise entre 150 µm et 350 µm, de préférence entre 200 µm et 300 µm.

6. Procédé de fabrication d'une embase (1) selon l'une quelconque des revendications 2 à 5, **caractérisé en ce que** les sillons (7) ont une profondeur comprise entre 5 µm et 15 µm, de préférence entre 7 µm et 10 µm.

7. Procédé de fabrication d'une embase (1) selon l'une quelconque des revendications 1 à 6, **caractérisé en ce que**, avant ou après texturation d'une partie au moins de la surface de réception (6), on procède à un balayage avec le faisceau du laser d'une partie au moins de ladite surface de réception (6) de façon à provoquer un jaunissement de ladite au moins une partie de ladite surface de réception (6).

8. Procédé de fabrication d'une embase (1) selon la revendication 7, **caractérisé en ce qu'**on procède à un balayage avec le faisceau du laser de la totalité de ladite surface de réception (6) de façon à provoquer un jaunissement de la totalité de ladite surface de réception (6).

9. Procédé de fabrication d'une embase (1) selon l'une quelconque des revendications 1 à 8, **caractérisé en ce que** :
- l'embase (1) comporte au moins un organe d'indexation en rotation (9) comprenant une face (9a - 9c) ou surface conformée pour coopérer avec la prothèse dentaire (2) afin de bloquer en rotation ladite embase (1) par rapport à la prothèse dentaire (2) autour de la deuxième direction d'allongement (III-III),
- ladite face (9a - 9c) ou surface est dépourvue de texturation.

10. Procédé de fabrication ex vivo d'un ensemble de restauration dentaire (13) comprenant :
- une prothèse dentaire (2), de préférence fabriquée en un matériau céramique,
- une embase (1) en titane ou en alliage de titane pour la réception d'une prothèse dentaire (2) sur un implant dentaire (3),
lors duquel :
- on fournit une embase (1) obtenue par la mise en œuvre du procédé de fabrication selon l'une quelconque des revendications 1 à 9,
- on fournit une prothèse dentaire (2), comportant un logement intérieur (10) à surface de liaison (11) destinée à être rapportée et fixée par collage à la surface de réception (6) de l'embase (1),
- on rapporte et on fixe la prothèse dentaire (2) sur l'embase (1) par collage entre la surface de liaison (11) de la prothèse dentaire (2) et la surface de réception (6) de l'embase (1),
- la surface de liaison (11) de la prothèse dentaire (2) n'a pas subi de traitement de surface abrasif, notamment par sablage.

11. Embase (1) en titane ou en alliage de titane pour la réception d'une prothèse dentaire (2) sur un implant dentaire (3), s'étendant sensiblement selon une direction longitudinale (I-I) entre une extrémité proximale (1a) et une extrémité distale (1b), comportant :
- un tronçon proximal (4) conformé pour être reçu dans ou sur un implant dentaire (3) et s'étendant selon une première direction d'allongement (II-II),
- un tronçon distal (5) conformé pour recevoir en appui une prothèse dentaire (2) et s'étendant selon une deuxième direction d'allongement (III-III), ledit tronçon distal (5) comportant une surface de réception (6) destinée à recevoir ladite prothèse dentaire (2) par collage, ladite surface de réception (6) étant au moins en partie texturée par laser par creusement de sillons (7) dans ladite surface de réception (6).

12. Embase (1) selon la revendication 11, **caractérisée en ce que** les sillons (7) de la texturation forment une grille.

13. Embase (1) selon la revendication 12, **caractérisée en ce que** la grille présente un motif sensiblement rectangulaire, de préférence sensiblement carré.

14. Embase (1) selon la revendication 13, **caractérisée en ce que** la grille comporte des sillons (7) orientés de façon oblique, de préférence à sensiblement 45°, par rapport à la deuxième direction d'allongement (III-III).

15. Embase (1) selon l'une des revendications 13 ou 14, **caractérisée en ce que** la grille présente un motif sensiblement carré dont la longueur des côtés est comprise entre 150 µm et 350 µm, de préférence entre 200 µm et 300 µm.

16. Embase (1) selon l'une quelconque des revendications 12 à 15, **caractérisée en ce que** les sillons (7) ont une profondeur comprise entre 5 µm et 15 µm, de préférence entre 7 µm et 10 µm.

17. Embase (1) selon la revendication 16, **caractérisée en ce que** les sillons (7) sont bordés, le long de leurs côtés, par des bourrelets de matière (8a - 8b) présentant une hauteur comprise entre 5 µm et 15 µm, de préférence entre 7 µm et 10 µm.

18. Embase (1) selon l'une quelconque des revendications 11 à 17, **caractérisée en ce qu'**une partie au moins de ladite surface de réception (6) présente une coloration jaune.

19. Embase (1) selon la revendication 18, **caractérisée en ce que** toute ladite surface de réception (6) présente une coloration jaune.

20. Embase (1) selon l'une quelconque des revendications 11 à 19, **caractérisée en ce que** :
- l'embase (1) comporte au moins un organe d'indexation en rotation (9) comprenant une face (9a - 9c) ou surface conformée pour coopérer avec la prothèse dentaire (2) afin de bloquer en rotation ladite embase (1) par rapport à la prothèse dentaire (2) autour de la deuxième direction d'allongement (III-III),
- ladite face (9a - 9c) ou surface est dépourvue de texturation par laser.

21. Embase (1) selon l'une quelconque des revendications 1 à 20, **caractérisée en ce que** la surface de réception (6) présente une aire inférieure à 30 mm².

22. Ensemble de restauration dentaire (13) comportant :
- une embase (1) obtenue par le procédé selon l'une quelconque des revendications 1 à 9 ou une embase (1) selon l'une quelconque des revendications 11 à 21,
- une prothèse dentaire (2), de préférence fabriquée en un matériau céramique, et comportant un logement intérieur (10) à surface de liaison (11) destinée à être rapportée et fixée par collage à la surface de réception (6) de l'embase (1).

23. Ensemble de restauration dentaire (13) selon la revendication 22, **caractérisé en ce que** la surface de liaison (11) de la prothèse dentaire (2) n'a pas subi de traitement de surface abrasif, notamment par sablage.

## Patentansprüche

1. Verfahren zur Herstellung einer Basis (1) aus Titan oder einer Titanlegierung zur Aufnahme einer Zahnprothese (2) auf einem Zahnimplantat (3), die sich im Wesentlichen in Längsrichtung (I-I) zwischen einem proximalen Ende (1a) und einem distalen Ende (1b) erstreckt und Folgendes umfasst:
- einen proximalen Abschnitt (4), der dazu ausgestaltet ist, in oder auf einem Zahnimplantat (3) aufgenommen zu werden und sich in einer ersten Längsrichtung (II-II) erstreckt,
- einen distalen Abschnitt (5), der dazu ausgestaltet ist, eine Zahnprothese (2) aufzunehmen und sich in einer zweiten Längsrichtung (III-III) erstreckt, wobei der distale Abschnitt (5) eine Aufnahmefläche (6) aufweist, die dazu bestimmt ist, die Zahnprothese (2) durch Kleben aufzunehmen,
Herstellungsverfahren, wobei die Aufnahmefläche (6) mindestens teilweise durch Lasern strukturiert wird, indem Rillen (7) in die Aufnahmefläche (6) eingebracht werden.

2. Verfahren zur Herstellung einer Basis (1) nach Anspruch 1,
**dadurch gekennzeichnet, dass** die Rillen (7) der Strukturierung ein Gitter bilden.

3. Verfahren zur Herstellung einer Basis (1) nach Anspruch 2,
**dadurch gekennzeichnet, dass** das Gitter ein im Wesentlichen rechteckiges, vorzugsweise im Wesentlichen quadratisches Muster aufweist.

4. Verfahren zur Herstellung einer Basis (1) nach Anspruch 3,
**dadurch gekennzeichnet, dass** die Strukturierung durch Einbringen von Rillen (7) erfolgt, die schräg, vorzugsweise im Wesentlichen um 45°, zur zweiten Längsrichtung (III-III) ausgerichtet sind.

5. Verfahren zur Herstellung einer Basis (1) nach einem der Ansprüche 3 oder 4, **dadurch gekennzeichnet, dass** das Gitter mit einem im Wesentlichen quadratischen Muster hergestellt wird, dessen Seitenlänge zwischen 150 µm und 350 µm, vorzugsweise zwischen 200 µm und 300 µm, liegt.

6. Verfahren zur Herstellung einer Basis (1) nach einem der Ansprüche 2 bis 5, **dadurch gekennzeichnet, dass** die Rillen (7) eine Tiefe zwischen 5 µm und 15 µm, vorzugsweise zwischen 7 µm und 10 µm, aufweisen.

7. Verfahren zur Herstellung einer Basis (1) nach einem der Ansprüche 1 bis 6, **dadurch gekennzeichnet, dass** vor oder nach der Strukturierung mindestens eines Teils der Aufnahmefläche (6) mindestens ein Teil der Aufnahmefläche (6) mit dem Laserstrahl abgetastet wird, um eine Gelbfärbung des mindestens einen Teils der genannten Aufnahmefläche (6) zu bewirken.

8. Verfahren zur Herstellung einer Basis (1) nach Anspruch 7, **dadurch gekennzeichnet, dass** die gesamte Aufnahmefläche (6) mit dem Laserstrahl abgetastet wird, um eine Gelbfärbung der gesamten Aufnahmefläche (6) zu bewirken.

9. Verfahren zur Herstellung einer Basis (1) nach einem der Ansprüche 1 bis 8, **dadurch gekennzeichnet, dass**:
- die Basis (1) mindestens ein Drehindexierungselement (9) umfasst, dass eine Fläche (9a-9c) oder Oberfläche aufweist, die dazu ausgestaltet ist, mit der Zahnprothese (2) zusammenzuwirken, um die Basis (1) in Bezug auf die Zahnprothese (2) um die zweite Längsrichtung (III-III) gegen Drehung zu sichern,
- die Fläche (9a-9c) oder Oberfläche keine Strukturierung aufweist.

10. Verfahren zur ex-vivo-Herstellung einer Zahnrestaurationsbaugruppe (13), umfassend:
- einen Zahnersatz (2), der vorzugsweise aus Keramik hergestellt ist,
- eine Basis (1) aus Titan oder einer Titanlegierung zur Aufnahme eines Zahnersatzes (2) auf einem Zahnimplantat (3),
wobei:
- eine Basis (1) bereitgestellt wird, die durch das Herstellungsverfahren nach einem der Ansprüche 1 bis 9 erhalten wurde,
- eine Zahnprothese (2) bereitgestellt wird, die eine Innenaufnahme (10) mit einer Verbindungsfläche (11) aufweist, die dazu bestimmt ist, durch Kleben an der Aufnahmefläche (6) der Basis (1) angebracht und befestigt zu werden,
- die Zahnprothese (2) auf die Basis (1) aufgebracht und durch Kleben zwischen der Verbindungsfläche (11) der Zahnprothese (2) und der Aufnahmefläche (6) der Basis (1) befestigt wird,
- die Verbindungsfläche (11) der Zahnprothese (2) keiner abrasiven Oberflächenbehandlung, insbesondere keinem Sandstrahlen, unterzogen wurde.

11. Basis (1) aus Titan oder einer Titanlegierung zur Aufnahme einer Zahnprothese (2) auf einem Zahnimplantat (3), die sich im Wesentlichen in Längsrichtung (I-I) zwischen einem proximalen Ende (1a) und einem distalen Ende (1b) erstreckt und Folgendes umfasst:
- einen proximalen Abschnitt (4), der dazu ausgestaltet ist, in oder auf einem Zahnimplantat (3) aufgenommen zu werden und sich in einer ersten Längsrichtung (II-II) erstreckt,
- einen distalen Abschnitt (5), der dazu ausgestaltet ist, eine Zahnprothese (2) aufzunehmen und sich in einer zweiten Längsrichtung (III-III) erstreckt, wobei der distale Abschnitt (5) eine Aufnahmefläche (6) aufweist, die dazu bestimmt ist, die Zahnprothese (2) durch Kleben aufzunehmen, wobei
die Aufnahmefläche (6) mindestens teilweise durch Lasern strukturiert wird, indem Rillen (7) in die Aufnahmefläche (6) eingebracht werden.

12. Basis (1) nach Anspruch 11, **dadurch gekennzeichnet, dass** die Rillen (7) der Strukturierung ein Gitter bilden.

13. Basis (1) nach Anspruch 12, **dadurch gekennzeichnet, dass** das Gitter ein im Wesentlichen rechteckiges, vorzugsweise im Wesentlichen quadratisches Muster aufweist.

14. Basis (1) nach Anspruch 13, **dadurch gekennzeichnet, dass** das Gitter Rillen (7) aufweist, die schräg, vorzugsweise im Wesentlichen um 45°, zur zweiten Längsrichtung (III-III) ausgerichtet sind.

15. Basis (1) nach einem der Ansprüche 13 oder 14, wobei das Gitter ein im Wesentlichen quadratisches Muster aufweist, dessen Seitenlänge zwischen 150 µm und 350 µm, vorzugsweise zwischen 200 µm und 300 µm, liegt.

16. Basis (1) nach einem der Ansprüche 12 bis 15, wobei die Rillen (7) eine Tiefe zwischen 5 µm und 15 µm, vorzugsweise zwischen 7 µm und 10 µm aufweisen.

17. Basis (1) nach Anspruch 16, **dadurch gekennzeichnet, dass** die Rillen (7) an ihren Seiten von Materialwülsten (8a-8b) mit einer Höhe zwischen 5 µm und 15 µm, vorzugsweise zwischen 7 µm und 10 µm, begrenzt werden.

18. Basis (1) nach einem der Ansprüche 11 bis 17, **dadurch gekennzeichnet, dass** mindestens ein Teil der Aufnahmefläche (6) eine Gelbfärbung aufweist.

19. Basis (1) nach Anspruch 18, **dadurch gekennzeichnet, dass** die ganze Aufnahmefläche (6) eine Gelbfärbung aufweist.

20. Basis (1) nach einem der Ansprüche 11 bis 19, **dadurch gekennzeichnet, dass**:
- die Basis (1) mindestens ein Drehindexierungselement (9) umfasst, das eine Fläche (9a-9c) oder Oberfläche aufweist, die dazu ausgestaltet ist, mit der Zahnprothese (2) zusammenzuwirken, um die Basis (1) in Bezug auf die Zahnprothese (2) um die zweite Längsrichtung (III-III) gegen Drehung zu sichern,
- die Fläche (9a-9c) oder Oberfläche keine Laserstrukturierung aufweist.

21. Basis (1) nach einem der Ansprüche 1 bis 20, **dadurch gekennzeichnet, dass** die Aufnahmefläche (6) eine Fläche von weniger als 30 mm² aufweist.

22. Zahnrestaurationsbaugruppe (13), umfassend:
- eine Basis (1), die durch das Verfahren nach einem der Ansprüche 1 bis 9 oder eine Basis (1) nach einem der Ansprüche 11 bis 21 hergestellt wird,
- eine Zahnprothese (2), die vorzugsweise aus Keramik hergestellt ist und eine Innenaufnahme (10) mit einer Verbindungsfläche (11) aufweist, die dazu bestimmt ist, durch Kleben ab der Aufnahmefläche (6) der Basis (1) angebracht und befestigt zu werden.

23. Zahnrestaurationsbaugruppe (13) nach Anspruch 22, **dadurch gekennzeichnet, dass** die Verbindungsfläche (11) der Zahnprothese (2) keiner abrasiven Oberflächenbehandlung, insbesondere keinem Sandstrahlen, unterzogen wurde.

## Claims

1. Method for manufacturing an abutment (1) made of titanium or of titanium alloy for receiving a dental prosthesis (2) on a dental implant (3), extending substantially along a longitudinal direction (I-I) between a proximal end (1a) and a distal end (1b), comprising:
- a proximal section (4) configured to be received in or on a dental implant (3) and extending along a first direction of elongation (II-II),
- a distal section (5) configured to receive and support a dental prosthesis (2) and extending along a second direction of elongation (III-III), said distal section (5) having a receiving surface (6) intended to receive said dental prosthesis (2) by bonding,
method for manufacturing wherein one texturizes at least partially said receiving surface (6) by laser by hollowing out grooves (7) in said receiving surface (6).

2. Method for manufacturing an abutment (1) according to Claim 1, **characterized in that** said grooves (7) of the texturing form a grid.

3. Method for manufacturing an abutment (1) according to Claim 2, **characterized in that** the grid has a substantially rectangular pattern, preferably substantially square.

4. Method for manufacturing an abutment (1) according to Claim 3, **characterized in that** the texturing is carried out by hollowing out grooves (7) that are oriented obliquely, preferably at substantially 45°, with respect to the second direction of elongation (III-III).

5. Method for manufacturing an abutment (1) according to either of Claims 3 and 4, **characterized in that** the grid is produced with a substantially square pattern, of which the length of the sides is between 150 µm and 350 µm, preferably between 200 µm and 300 µm.

6. Method for manufacturing an abutment (1) according to any one of Claims 2 to 5, **characterized in that** the grooves (7) have a depth of between 5 µm and 15 µm, preferably between 7 µm and 10 µm.

7. Method for manufacturing an abutment (1) according to any one of Claims 1 to 6, **characterized in that**, before or after the texturing of at least part of the receiving surface (6), the beam of the laser scans at least part of said receiving surface (6) so as to bring about a yellowing of said at least one part of said receiving surface (6).

8. Method for manufacturing an abutment (1) according to Claim 7, **characterized in that** the beam of the laser scans the totality of said receiving surface (6) so as to bring about a yellowing of the whole of said receiving surface (6).

9. Method for manufacturing an abutment (1) according to any one of Claims 1 to 8, **characterized in that**:
- the abutment (1) has at least one rotation indexing member (9) comprising a face (9a-9c) or surface configured to cooperate with the dental prosthesis (2) in order to block said abutment (1) in rotation with respect to the dental prosthesis (2) about the second direction of elongation (III-III),
- said face (9a-9c) or surface is devoid of texturing.

10. Method for manufacturing ex vivo a dental restoration assembly (13) comprising:
- a dental prosthesis (2), preferably manufactured from a ceramic material,
- an abutment (1) made of titanium or of titanium alloy, for receiving a dental prosthesis (2) on a dental implant (3),
in which method:
- an abutment (1) is provided which has been obtained by implementing the manufacturing method according to any one of Claims 1 to 9,
- a dental prosthesis (2) is provided which comprises an inner housing (10) with a connection surface (11) intended to be attached and fixed by bonding to the receiving surface (6) of the abutment (1),
- the dental prosthesis (2) is attached and fixed to the abutment (1) by bonding between the connection surface (11) of the dental prosthesis (2) and the receiving surface (6) of the abutment (1),
- the connection surface (11) of the dental prosthesis (2) has not undergone abrasive surface treatment, in particular by sandblasting.

11. Abutment (1) made of titanium or of titanium alloy for receiving a dental prosthesis (2) on a dental implant (3), extending substantially along a longitudinal direction (I-I) between a proximal end (1a) and a distal end (1b), having:
- a proximal section (4) configured to be received in or on a dental implant (3) and extending along a first direction of elongation (II-II),
- a distal section (5) configured to receive and support a dental prosthesis (2) and extending along a second direction of elongation (III-III), said distal section (5) having a receiving surface (6) intended to receive said dental prosthesis (2) by bonding,
said receiving surface (6) being at least partially textured by laser by hollowing out grooves (7) in said receiving surface (6).

12. Abutment (1) according to Claim 11, **characterized in that** said grooves (7) of the texturing form a grid.

13. Abutment (1) according to Claim 12, **characterized in that** the grid has a substantially rectangular pattern, preferably substantially square.

14. Abutment (1) according to Claim 13, **characterized in that** the grid has grooves (7) that are oriented obliquely, preferably at substantially 45°, with respect to the second direction of elongation (III-III).

15. Abutment (1) according to either of Claims 13 and 14, **characterized in that** the grid has a substantially square pattern, of which the length of the sides is between 150 µm and 350 µm, preferably between 200 µm and 300 µm.

16. Abutment (1) according to any one of Claims 12 to 15, **characterized in that** the grooves (7) have a depth of between 5 µm and 15 µm, preferably between 7 µm and 10 µm.

17. Abutment (1) according to Claim 16, **characterized in that** the grooves (7) are bordered, along their sides, by material beads (8a-8b) having a height of between 5 µm and 15 µm, preferably of between 7 µm and 10 µm.

18. Abutment (1) according to any one of Claims 11 to 17, **characterized in that** at least part of said receiving surface (6) has a yellow coloration.

19. Abutment (1) according to Claim 18, **characterized in that** the whole of said receiving surface (6) has a yellow coloration.

20. Abutment (1) according to any one of Claims 11 to 19, **characterized in that**:
- the abutment (1) has at least one rotation indexing member (9) comprising a face (9a-9c) or surface configured to cooperate with the dental prosthesis (2) in order to block said abutment (1) in rotation with respect to the dental prosthesis (2) about the second direction of elongation (III-III),
- said face (9a-9c) or surface is devoid of texturing by laser.

21. Abutment (1) according to any one of Claims 1 to 20, **characterized in that** the receiving surface (6) has an area of less than 30 mm².

22. Dental restoration assembly (13) having:
- an abutment (1) obtained by the method according to any one of Claims 1 to 9 or an abutment (1) according to any one of Claims 11 to 21,
- a dental prosthesis (2), preferably manufactured from a ceramic material and having an inner housing (10) with a connection surface (11) intended to be attached and fixed by bonding to the receiving surface (6) of the abutment (1).

23. Dental restoration assembly (13) according to Claim 22, **characterized in that** the connection surface (11) of the dental prosthesis (2) has not undergone abrasive surface treatment, in particular by sandblasting.
